# EUROPÄISCHE PATENTANMELDUNG

(11) **EP 2 538 157 A2**
(43) Veröffentlichungstag der Anmeldung: **26.12.2012**
(21) Anmeldenummer: 12172326.6
(22) Anmeldetag: 18.06.2012
(51) Int. Cl.: F25B 17/02, F25B 35/02

(54) **Periodisch arbeitende Sorptionsvorrichtung**

(30) Priorität: 24.06.2011 DE 102011105742
(71) Anmelder: Viessmann Werke GmbH & Co. KG, 35108 Allendorf (DE)
(72) Erfinder: Dawoud, Belal, Dr., 59955 Winterberg (DE); Wohlfeil, Arnold, Dr., 35066 Frankenberg (DE); Bornmann, Andreas, 35099 Burgwald (DE)
(74) Vertreter: Wolf, Michael

(57) **Zusammenfassung**

Die Erfindung betrifft eine periodisch arbeitende Sorptionsvorrichtung, umfassend eine Heizeinrichtung mit einer beheizbaren Oberfläche (1) zum Erhitzen eines Gemisches aus einem fluiden Absorptionsmittel und einem fluiden Kältemittel, wobei der Oberfläche (1) eine Gemischzuführung (2) zugeordnet ist. Nach der Erfindung ist vorgesehen, dass die Gemischzuführung (2) als Austrittsöffnung zur Bildung eines die beheizbare Oberfläche (1) benetzenden Gemischstrahls ausgebildet ist.

## Beschreibung

Die Erfindung betrifft eine periodisch arbeitende Sorptionsvorrichtung gemäß dem Oberbegriff des Patentanspruchs 1.

Eine periodisch arbeitende Sorptionsvorrichtung der eingangs genannten Art ist nach der DE 615 324 A bekannt. Diese besteht unter anderem aus einer Heizeinrichtung (Kocher) mit einer beheizbaren Oberfläche (Innenwandung des Kochers) zum Erhitzen eines Gemisches aus einem fluiden Absorptionsmittel und einem fluiden Kältemittel, wobei der Oberfläche eine Gemischzuführung (in der Figur der DE 625 324 A mit dem Bezugszeichen 19 versehen) zugeordnet ist. Dieses Dokument offenbart somit die Möglichkeit, eine Sorptionsvorrichtung mit einem fluiden, periodisch ein fluides Kältemittel ab- und desorbierenden Absorptionsmittel zu betreiben.

Der Erfindung liegt die Aufgabe zugrunde, eine periodisch arbeitende Sorptionsvorrichtung zu schaffen, bei der unter Verwendung eines fluiden Absorptionsmittels ein höherer Wirkungsgrad erreichbar ist.

Diese Aufgabe ist nach der Erfindung mit einer periodisch arbeitenden Sorptionsvorrichtung durch die im Kennzeichen des Patentanspruchs 1 aufgeführten Merkmale gelöst.

Nach der Erfindung ist also vorgesehen, dass die Gemischzuführung als Austrittsöffnung zur Bildung eines die beheizbare Oberfläche benetzenden Gemischstrahls ausgebildet ist.

Mit anderen Worten wird das aus Absorptions- und Kältemittel bestehende Gemisch erfindungsgemäß nicht mehr wie bei der DE 615 324 A in einem geschlossenen Raum mittels der heißen Wände des Raumes erhitzt, sondern vielmehr als Freistrahl, der natürlich auch schon Tröpfen gebildet haben kann, auf die beheizbare Oberfläche gelenkt. Die Gemischzuführung ist somit als freistehende Austrittsdüse ausgebildet, die mit Distanz zur beheizbaren Oberfläche angeordnet ist. Das auf der Oberfläche auftreffende Gemisch benetzt diese filmartig, so dass die von der Oberfläche abgegebene Wärme unmittelbar zur Verdampfung des Kältemittels führt. Von Vorteil ist dabei außerdem, dass die Wärmeübertragung von der beheizbaren Oberfläche unmittelbar (eine einzige Wand!) auf das Gemisch erfolgen kann, während bei der Lösung nach der DE 615 324 A die Wärme mehrere Wände (die Wandung des Schornsteins 31 und die so genannte Pumpenschlinge 13a) durchdringen muss. Diese Art der Verdampfung mit einem so genannten Riesel- oder auch Sprühwärmeübertrager bzw. Riesel-oder auch Sprühsorber hat positiven Einfluss auf den Wirkungsgrad der Vorrichtung, was unten noch näher erläutert wird.

Andere vorteilhafte Weiterbildungen der erfindungsgemäßen Sorptionsvorrichtung ergeben sich aus den abhängigen Patentansprüchen.

Der Vollständigkeit halber wird noch auf folgenden Stand der Technik hingewiesen:

Aus der DE 36 25 247 A1 ist eine periodisch arbeitende Ad- und Desorptionsmaschine bekannt, bei der ein fester (nicht-fluider) Sorber in einem ersten, von einem Kondensator umschlossenen Kessel angeordnet ist, wobei unterhalb des ersten Kessels ein zweiter Kessel mit einem Verdampfer angeordnet ist.

Aus der DE 10 2008 006 420 B3 ist ebenfalls eine periodisch arbeitende Sorptionsvorrichtung mit einem festen Sorber bekannt, bei der aber der Verdampfer als so genannter "Rieselfilmverdampfer" ausgebildet ist und die im Vergleich zur DE 36 25 247 A1 einen erheblich besseren Wirkungsgrad aufweist.

Mit Abstand betrachtet, weisen feste Sorptionsmittel zwei Hauptnachteile auf, nämlich einerseits eine schlechte Wärmeleitfähigkeit und andererseits eine langsame Diffusion der Kältemittelmoleküle in das Gefüge des porösen Sorbenten (schlechte Stofftransporteigenschaften).

Verwendet man ein festes Sorptionsmittel in Form von losen Pellets zwischen den Lamellen eines Sorberwärmeübertragers (siehe hierzu die EP 1 178 269 B1), so wird zwar die Stoffübertragung zu den einzelnen Pellets optimiert; durch den punktförmigen Kontakt ist jedoch gleichzeitig die Wärmeübertragung erheblich beeinträchtigt.

Eine Alternative zur Verbesserung der Wärmeübertragung mit festen Sorptionsmitteln ist nach der Lösung aus der WO 2010/040355 A2 bekannt, bei der das Sorptionsmittel direkt auf die Wärme-übertragerfläche in Form von kompakten Schichten aufgebracht ist. In diesem Fall kann aber aufgrund der Schichtdicke, die für das Erreichen eines hohen Wirkungsgrades entsprechend dick ausgebildet sein muss, die Stoffübertragung nicht optimal sein. Dies führt dazu, dass der Sorptionsprozess vergleichsweise lange dauert und somit die abgegebene Leistung eingeschränkt ist.

Die erfindungsgemäße Sorptionsvorrichtung einschließlich ihrer vorteilhaften Weiterbildungen gemäß der abhängigen Patentansprüche wird nachfolgend anhand der zeichnerischen Darstellung eines bevorzugten Ausführungsbeispiels näher erläutert.

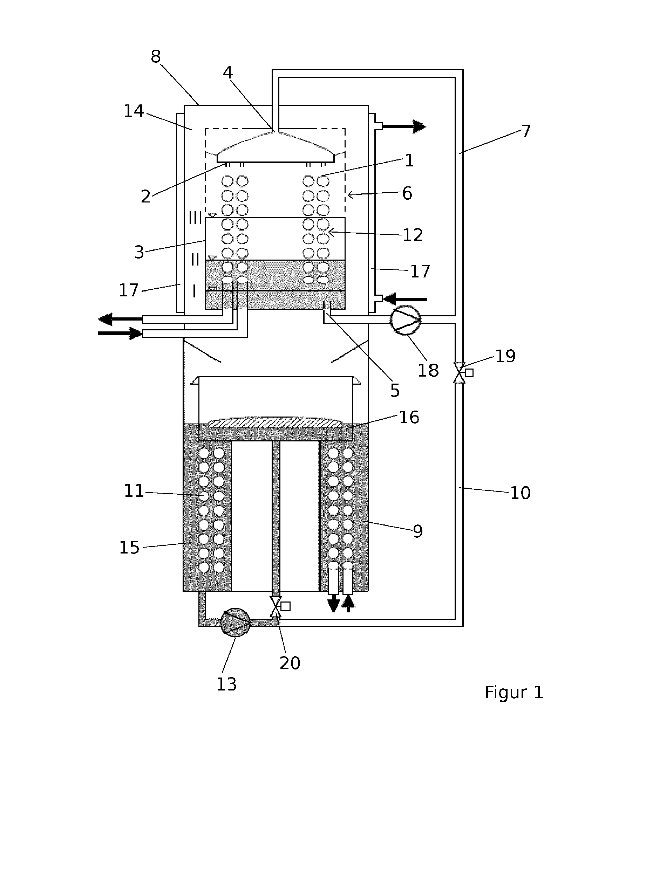

Es zeigt
- Figur 1: schematisch im Schnitt die Sorptionsvorrichtung mit dem erfindungsgemäßen Rieselsorber.

Die in Figur 1 dargestellte, periodisch arbeitende Sorptionsvorrichtung weist zunächst in an sich bekannter Weise eine Heizeinrichtung mit einer beheizbaren Oberfläche 1 zum Erhitzen eines Gemisches aus einem fluiden Absorptionsmittel und einem fluiden Kältemittel auf. Dabei ist der Oberfläche 1 eine Gemischzuführung 2 zugeordnet.

Die beheizbare Oberfläche 1 entspricht dabei im Ansatz dem flüssigkeitsdurchströmten Wärmetauscher des Sorbers gemäß der DE 10 2008 006 420 B3, allerdings ohne das darauf angeordnete, feste Sorptionsmittel (Zeolith). Dieser Wärmetauscher, der wie Figur 1 andeutet, besonders bevorzugt als Rohr, insbesondere gewendeltes Rohr bzw. gewendeltes Doppelrohr, ausgebildet ist, wobei zwischen nebeneinander verlaufenden Teilen des gewendelten Rohres ein Spalt 12 vorgesehen ist, ist, wie ebenfalls aus der DE 10 2008 006 420 B3 an sich bekannt, im oberen Bereich eines vakummdichten Gehäuses 8 bzw. Modulbehälters angeordnet. Um den Wärmetauscher erhitzen zu können, weist dieser (wie links in Figur 1 zu erkennen) einen Zu- und einen Abfuhranschluss auf, die in ebenfalls an sich bekannter Weise mit einem Wärmetauscher zum Beispiel eines Gasbrenners hydraulisch verbunden sind: Durch Einschalten des Gasbrenners und Zirkulation eines entsprechenden Heizkreismediums kann die Oberfläche 1 des Wärmetauschers beheizt werden.

Alternativ zum genannten Rohrwendelwärmetauscherkann auch ein Lamellenwärmetauscher oder dergleichen vorgesehen sein (nicht extra dargestellt), bei dem das Absorptionsmittel in analoger Weise die beheizbare Oberfläche benetzt.

Im unteren Teil des Gehäuses 8 ist in ebenfalls bekannter Weise ein Verdampfer 11 angeordnet, und zwar, wie dargestellt, besonders bevorzugt der so genannte Rieselverdampfer gemäß der DE 10 2008 006 420 B3. Mit anderen Worten ist auch bei der erfindungsgemäßen Lösung vorgesehen, dass in einem ersten Volumenbereich 14 ein periodisch ein Kältemittel sorbierender und desorbierender "Sorber" und ein Kondensator 17 angeordnet sind, wobei der vorzugsweise mantelartige Kondensator 17 den oberen Teil des Gehäuses 8 mindestens teilweise umschließend ausgebildet ist. Unterhalb des ersten Volumenbereichs 14 ist weiterhin ein zweiter Volumenbereich 15 vorgesehen, in dem der Verdampfer 11 angeordnet ist, wobei außerdem ein dritter Volumenbereich 16 vorgesehen ist, der zur Aufnahme von Kältemittel über eine mit einer Pumpe 13 versehene Verbindungsleitung mit dem zweiten Volumenbereich 15 fluidisch bzw. hydraulisch verbunden ist und der zur Abgabe von Kältemittel an den zweiten Volumenbereich 15 mindestens eine Öffnung aufweist. Ferner weist der dritte Volumenbereich 16 eine zur mindestens teilweise Kältemittelfreistellung des Verdampfers ausreichende Volumengröße auf.

Wesentlich für die erfindungsgemäße Sorptionsvorrichtung ist nun, dass die Gemischzuführung 2 als Austrittsöffnung zur Bildung eines die beheizbare Oberfläche 1 benetzenden Gemischstrahls ausgebildet ist. Dabei ist die Gemischzuführung 2 bevorzugt oberhalb, insbesondere vertikal oberhalb, der beheizbaren Oberfläche 1 angeordnet. Wie aus Figur 1 ersichtlich (angedeutet durch die vier kurzen senkrechten Linien), verlässt das Gemisch somit die brausekopfartig ausgebildete Gemischzuführung 2 (oder auch das Berieselungselement) und fällt - der Schwerkraft folgend - auf die Rohrwendel des Wärmetauschers bzw. die beheizbare Oberfläche 1.

Ein weiteres, wesentliches Merkmal der Erfindung besteht darin, dass die Oberfläche 1 bzw. der Wärmetauscher in einem Behälter 3 angeordnet ist, wobei dieser eine Zu- 4 und eine Abführung 5 für das fluide Absorptionsmittel bzw. je nach Betriebszyklus (auf den weiter unten noch genauer eingegangen wird) für das genannte Gemisch aufweist. Dieser Behälter 3 ist, wie Figur 1 zeigt, in einem oberen Teil des Gehäuses 8 angeordnet, d. h. auch dieser Behälter 3 ist mindestens teilweise vom Kondensator 17 umschlossen ausgebildet.

Die Zuführung 4 und die Abführung 5 sind außerhalb des Behälters 3 über eine Leitung 7 hydraulisch miteinander verbunden, wobei außerdem die Gemischzuführung 2 und die Zuführung 4 zum Behälter 3 durch den besagten "Brausekopf" hydraulisch miteinander verbunden sind. Ferner ist zwischen der Abführung 5 und der Zuführung 4 außerhalb des Behälters 3 und auch außerhalb des Gehäuses 8 zur Förderung des fluiden Absorptionsmittels bzw. je nach Betriebszyklus des genannten Gemisches eine Pumpe 18 vorgesehen.

Eine weitere, weiter unten noch genauer erläuterte Maßgabe besteht darin, dass der Behälter 3 ein zur Aufnahme sowohl des gesamten fluiden Absorptionsmittels als auch des gesamten fluiden Kältemittels ausreichend großes, fluiddichtes Hauptvolumen aufweist, wobei weiterhin die vorzugsweise mit der Pumpe 18 fluiddicht absperrbare Abführung 5 unterhalb dieses Hauptvolumens angeordnet ist.

Damit das fluide Kältemittel (typischer Weise Wasser bzw. Wasserdampf) aus dem ersten Volumenbereich 14 in den Behälter 3 und umgekehrt gelagen kann, ist der Behälter 3 oberhalb des Hauptvolumens mit mindestens einer (vorzugsweise einer ganzen Reihe von) Dampfdurchgangsöffnung(en) 6 versehen.

Wie bereits erwähnt, ist weiterhin im unteren Teil des Gehäuses 8 ein zweiter Volumenbereich 15 bzw. ein Aufnahmevolumen 9 für das fluide Kältemittel vorgesehen, wobei zwischen dem Aufnahmevolumen 9 und der Zuführung 4 des Behälters 3 eine Verbindungsleitung 10 vorgesehen ist. Diese ist zum Transport des Kältemittels bzw. eines Gemischs aus Kältemittel und Absorptionsmittel mit der Pumpe 13 versehen. Außerdem ist ein Absperrventil 19 vorgesehen, um das Aufnahmevolumen 9 hydraulisch von der Zuführung 4 abtrennen zu können.

Wie eingangs erläutert, wird die erfindungsgemäße Sorptionsvorrichtung nicht mit einem festen, sondern mit einem fluiden Absorptionsmittel betrieben. Besonders bevorzugt sind dabei Kältemittel-Lösungsmittel-Gemische, die insbesondere keine Rektifikation benötigen. Es eignen sich hierfür unter anderem Lithiumnitrat-Ammoniak bzw. Lithiumnitrat-Aminen als Arbeitsstoffpaarungen. Insbesondere eignen sich dafür die so genannte ionische Flüssigkeiten, also flüssige Salze, die, sofern kein Wasser darin gelöst ist, nur aus Ionen bestehen (siehe zum Beispiel WO 2006/124776 A2 oder WO 2006/134015 A1). Ionische Flüssigkeiten zeichnen sich durch eine Reihe interessanter Eigenschaften aus: Sie sind thermisch stabil, nicht entzündlich, haben einen sehr niedrigen, kaum messbaren Dampfdruck und verfügen über sehr gute Lösungseigenschaften für zahlreiche Substanzen.

Die erfindungsgemäße Sorptionsvorrichtung funktioniert wie folgt:

Wie auch bei der Lösung nach der DE 10 2008 006 420 B3 wird die erfindungsgemäße Sorptionsvorrichtung periodisch betrieben, und zwar abwechselnd in einer Desorptions- und einer Absorptionsphase.

In der Desorptionsphase wird das fluide Kältemittel aus dem fluiden Absorptionsmittel ausgetrieben. Dies geschieht dadurch, dass das Gemisch aus den beiden mittels der Pumpe 18 durch die Leitung 7 über die Zuführung 4 zur Gemischzuführung 2 transportiert wird. Von dort fällt das Gemisch auf die in der Desorptionsphase beheizte Oberfläche 1 des Rohrwendelwärmetauschers. Auf den Wendeln des Wärmetauschers bildet sich ein dünner Film, dem sehr gut Wärme zugeführt werden kann. Da der Film außerdem dünn ist, kann das Kältemittel auf diese Weise sehr gut aus dem Absorptionsmittel ausgetrieben werden.

Im Behälter 3 befindet sich eine bestimmte Menge an Absorptionsmittel. Prinzipiell läuft die Desorptionsphase so lange, bis das Kältemittel abhängig von der eingestellten Desorptionstemperatur aus dem Absorptionsmittel ausgetrieben ist. Dabei reduziert sich die Menge an Flüssigkeit im Behälter. Der sich am Ende der Desorptionsphase einstellende minimale Pegelstand ist in Figur 1 mit I gekennzeichnet.

Das aus dem Absorptionsmittel ausgetriebene, verdampfte Kältemittel kann durch die Dampfdurchgangsöffnungen 6 (typischer Weise in Form einer gelochten Behälterwandung ausgebildet) in den ersten Volumenbereich 14 gelangen und dort am Kondensator 17 auskondensieren.

Das dann wieder flüssige Kältemittel läuft an der Wand des Gehäuses 8 nach unten und sammelt sich in den Volumenbereichen 15 und 16. Aufgrund der vorgesehenen und in Figur 1 dargestellten Leitbleche gelangt das Kältemittel dabei zunächst in den Volumenbereich 16. Dieser ist aber, genau wie bei der Lösung nach der DE 10 2008 006 420 B3, bodenseitig mit Austrittsöffnungen versehen, so dass sich die Kältemittelniveaus der beiden Volumenbereiche 14 und 15 (bei nicht laufender Pumpe 13) automatisch aneinander anpassen.

Die Absorptionsphase beginnt, wie erwähnt, praktisch dann, wenn kein weiteres Kältemittel mehr aus dem Absorptionsmittel ausgetrieben werden kann. Dazu wird einerseits die Beheizung der Oberfläche 1 ausgeschaltet und andererseits die Pumpe 13 eingeschaltet. Die Pumpe 18 bleibt weiterhin in Betrieb, so dass nunmehr das kältemittelverarmte Absorptionsmittel im Behälter 3 umgepumpt wird.

Durch das Einschalten der Pumpe 13 wird das im Volumenbereich 15 befindliche Kältemittel bei geöffnetem Absperrventil 20 (und geschlossenem Absperrventil 19) in den Volumenbereich 16 umgepumpt. Aufgrund der bereits erwähnten Austrittsöffnungen rieselt das flüssige Kältemittel auf den freigestellten Verdampfer und kann auf diese Weise (über den Verdampfer eingekoppelte) Umgebungswärme aufnehmen und dabei selbst wieder verdampfen. Dieser Kältemitteldampf steigt im Gehäuse 8 auf, strömt durch die Dampfdurchgangsöffnungen 6 in den Behälter 3 und wird dort vom über die Rohrwendel strömenden Absorptionsmittel absorbiert. Dabei erwärmt sich das Absorptionsmittel in bekannter Weise, wobei diese Wärme wiederum auf sehr effektive Weise an die Oberfläche 1 bzw. den Rohrwendelwärmetauscher abgegeben werden kann. Da das Absorptionsmittel durch den Rieselprozess eine große Oberfläche aufweist, ist außerdem ein optimaler Stofftransport gewährleistet, was wiederum den Wirkungsgrad der Vorrichtung steigert.

Die Absorptionsphase läuft im Prinzip so lange, bis das Absorptionsmittel entsprechend der eingestellten Kühlmitteltemperatur (insbesondere Heizungsrücklauftemperatur) mit Kältemittel gesättigt ist. Durch die Absorption wird die Gesamtflüssigkeitsmenge im Behälter 3 vergrößert; in Figur 1 ist mit II der Füllstand des Behälters am Ende der Absorptionsphase markiert.

Insbesondere im Vergleich zur eingangs genannten DE 615 324 A zeichnet sich die erfindungsgemäße Lösung somit dadurch aus, dass die Oberfläche 1 zusammen mit dem fluiden Absorptionsmittel einerseits in einer Absorptionsphase einen Absorber und andererseits in einer Desorptionsphase einen Desorber bildet, oder in anderen Worten dadurch, dass das fluide Absorptionsmittel sowohl während der Absorptionsphase als auch während der Desorptionsphase die Oberfläche 1 benetzend ausgebildet ist. Bei der Lösung nach der DE 615 324 A gibt es insbesondere keine Desorptionsphase, bei der das Absorptionsmittel über einen Wärmetauscher gerieselt wird.

Eine weitere Besonderheit der erfindungsgemäßen Vorrichtung besteht schließlich darin, dass sie neben der Desorptions- und Absorptionsphase auch noch eine Reinigungsphase aufweist. Diese Reinigungsphase dient dazu, eventuell in den ersten, zweiten oder dritten Volumenbereich gelangtes Absorptionsmittel wieder in den Behälter 3 zurück zu fördern.

Um diese Reinigungsphase zu starten, wird das zwischen dem zweiten und dritten Volumenbereich vorgesehene Absperrventil 20 geschlossen, die Pumpe 13 eingeschaltet und die im Volumenbereich 15 befindliche Flüssigkeit (Gemisch aus Kältemittel und Absorptionsmittel) über die Verbindungsleitung 10, durch das in der Reinigungsphase geöffnete Absperrventil 19, durch die Leitung 7 zur Gemischzuführung 2 transportiert. Da die Pumpe 18 zu diesem Zeitpunkt noch ausgeschaltet ist, sammelt sich praktisch die Gesamtmenge an Kältemittel und Absorptionsmittel im Behälter 3 (damit die Pumpe 13 nicht trocken läuft und dadurch beschädigt wird, sind die Dampfdurchgangsöffnungen 6, wie aus Figur 1 ersichtlich, so angeordnet, dass immer ein Teil der Flüssigkeitsmenge durch diese aus dem Behälter 3 austreten kann, sprich überläuft, und damit den Volumenbereich 15 und somit insbesondere auch die darunter angeordnete Pumpe 13 füllt); dieser Zustand ist in Figur 1 mit III gekennzeichnet.

Wird nun das Ventil 19 wieder geschlossen, die Pumpe 18 und die Beheizung der Oberfläche 1 eingeschaltet, kann mit einer neuerlichen Desorptionsphase das Gemisch aus Kältemittel und Absorptionsmittel vollständig aufgetrennt werden.

Eine solche Reinigungsphase kommt insbesondere bei der Neueinstallation der Sorptionsvorrichtung, aber auch immer wieder zwischendurch in Betracht, um den Wirkungsgrad hoch zu halten, denn dieser verschlechtert sich, wenn tatsächlich Absorptionsmittel aus dem Behälter 3 austritt, was je nach Gestaltung der Dampfdurchgangsöffnungen 6 nur mehr oder weniger sicher verhindert werden kann.

### Bezugszeichenliste

- 1: Oberfläche
- 2: Gemischzuführung
- 3: Behälter
- 4: Zuführung
- 5: Abführung
- 6: Dampfdurchgangsöffnung
- 7: Leitung
- 8: Gehäuse
- 9: Aufnahmevolumen
- 10: Verbindungsleitung
- 11: Verdampfer
- 12: Spalt
- 13: Pumpe
- 14: erster Volumenbereich
- 15: zweiter Volumenbereich
- 16: dritter Volumenbereich
- 17: Kondensator
- 18: Pumpe
- 19: Absperrventil
- 20: Absperrventil

## Patentansprüche

1. Periodisch arbeitende Sorptionsvorrichtung, umfassend eine Heizeinrichtung mit einer beheizbaren Oberfläche (1) zum Erhitzen eines Gemisches aus einem fluiden Absorptionsmittel und einem fluiden Kältemittel, wobei der Oberfläche (1) eine Gemischzuführung (2) zugeordnet ist,
**dadurch gekennzeichnet,**
**dass** die Gemischzuführung (2) als Austrittsöffnung zur Bildung eines die beheizbare Oberfläche (1) benetzenden Gemischstrahls ausgebildet ist.

2. Periodisch arbeitende Sorptionsvorrichtung nach Anspruch 1,
**dadurch gekennzeichnet,**
**dass** die Gemischzuführung (2) oberhalb, vorzugsweise vertikal oberhalb, der beheizbaren Oberfläche (1) angeordnet ist.

3. Periodisch arbeitende Sorptionsvorrichtung nach Anspruch 1 oder 2,
**dadurch gekennzeichnet,**
**dass** die Oberfläche (1) zusammen mit dem fluiden Absorptionsmittel einerseits in einer Absorptionsphase einen Absorber und andererseits in einer Desorptionsphase einen Desorber bildet.

4. Periodisch arbeitende Sorptionsvorrichtung nach einem der Ansprüche 1 bis 3,
**dadurch gekennzeichnet,**
**dass** die Oberfläche (1) als flüssigkeitsdurchströmter Wärmetauscher ausgebildet ist.

5. Periodisch arbeitende Sorptionsvorrichtung nach einem der Ansprüche 1 bis 4,
**dadurch gekennzeichnet,**
**dass** die Oberfläche (1) in einem Behälter (3) angeordnet ist, wobei dieser eine Zu- (4) und eine Abführung (5) für das fluide Absorptionsmittel aufweist.

6. Periodisch arbeitende Sorptionsvorrichtung nach Anspruch 5,
**dadurch gekennzeichnet,**
**dass** der Behälter (3) ein zur Aufnahme sowohl des gesamten fluiden Absorptionsmittels als auch des gesamten fluiden Kältemittels ausreichend großes, fluiddichtes Hauptvolumen aufweist.

7. Periodisch arbeitende Sorptionsvorrichtung nach Anspruch 6,
**dadurch gekennzeichnet,**
**dass** der Behälter (3) oberhalb des Hauptvolumens mit mindestens einer Dampfdurchgangsöffnung (6) versehen ist.

8. Periodisch arbeitende Sorptionsvorrichtung nach einem der Ansprüche 5 bis 7,
**dadurch gekennzeichnet,**
**dass** die Zuführung (4) und die Abführung (5) außerhalb des Behälters (3) über eine Leitung (7) hydraulisch miteinander verbunden sind.

9. Periodisch arbeitende Sorptionsvorrichtung nach einem der Ansprüche 5 bis 8,
**dadurch gekennzeichnet,**
**dass** der Behälter (3) in einem oberen Teil eines Gehäuses (8) angeordnet ist.

10. Periodisch arbeitende Sorptionsvorrichtung nach Anspruch 9,
**dadurch gekennzeichnet,**
**dass** der untere Teil des Gehäuses (8) ein Aufnahmevolumen (9) für das fluide Kältemittel aufweist, wobei zwischen dem Aufnahmevolumen (9) und der Zuführung (4) des Behälters (3) eine Verbindungsleitung (10) vorgesehen ist.
